# EUROPÄISCHE PATENTSCHRIFT

(11) **EP 1 568 096 B1**
(45) Veröffentlichungstag und Bekanntmachung des Hinweises auf die Patenterteilung: **12.04.2006**
(21) Anmeldenummer: 03788799.9
(22) Anmeldetag: 21.11.2003
(51) Int. Cl.: H01M 16/00, H01M 8/18

(54) **ANORDNUNG ZUR VERSORGUNG ENERGIE-AUTARKER SYSTEME**
CONFIGURATION FOR SUPPLYING ENERGY-AUTARKIC SYSTEMS
DISPOSITIF POUR ALIMENTER DES SYSTEMES AUTONOMES SUR LE PLAN ENERGETIQUE

(30) Priorität: 05.12.2002 DE 10256940
(43) Veröffentlichungstag der Anmeldung: 31.08.2005
(73) Patentinhaber: EnOcean GmbH, 82041 Oberhaching (DE)
(72) Erfinder: SCHMIDT, Frank, 85604 Zorneding (DE)
(74) Vertreter: Epping - Hermann - Fischer
(86) Internationale Anmeldenummer: PCT/DE2003/003857
(87) Internationale Veröffentlichungsnummer: WO 2004/051786

(56) Entgegenhaltungen:
- EP-A- 0 755 088
- DE-A- 1 513 098
- DE-A- 19 533 097
- US-A1- 2002 029 820
- US-A1- 2004 072 040

## Beschreibung

Die Erfindung betrifft eine Anordnung zur Versorgung energie-autarker Systeme, insbesondere Funksysteme, z. B. Funksensoren, mit aus thermischer Umgebungsenergie gewonnener und gespeicherter elektrischer Energie. Diese Funksensoren leisten zum Beispiel eine drahtlose Übertragung der von ihnen erfassten Messwerte und sind auf geringen Eigenenergieverbrauch ausgelegt, den sie durch ein Erfassen und Senden der Messwerte in zeitlichen Abständen erreichen.

Es ist bekannt, mittels Thermoelementen, die in einem Temperaturgradienten eines Raumes liegende thermische Energie in elektrische Energie umzuwandeln. Die Menge der dadurch gewonnenen elektrischen Energie ist abhängig von der Höhe des Temperaturgradienten. Zur Versorgung von energie-autarken Systemen wie z. B. Funksensoren, eignet sich die alleinige Verwendung von Thermoelementen zur Erzeugung bzw. zur Umwandlung von thermischer in elektrische Energie nur bedingt. Dies ist darin begründet, daß nur dann elektrische Energie zur Verfügung steht, wenn auch ein ausreichender Temperaturgradient zur Verfügung steht oder eine genügend hohe Anzahl von Thermoelementen verwendet wird. Dies hat den Nachteil, daß zum einen die Kosten zur Herstellung einer dergestaltigen Energieversorgung unverhältnismäßig hoch sind und dabei nicht zu jeder Zeit ausreichend Energie zur Verfügung steht.

Die Druckschrift EP 0755088 A beschreibt ein Stromversorgungssystem, in dem eine Kombination aus einer Brennstoffzelle, einer Elektrolysezelle und einer Speichereinrichtung dazu herangezogen wird, um Verbrauchs- und Angebotsspitzen zu kompensieren. Der Stromversorger ist dabei ein externes Kraftwerk oder ein interner Stromerzeuger, bestehend aus einem Generator und einem Energieumwandler, der zum Beispiel eine Verbrennungsmaschine ist. Zur Erzeugung der elektrischen Energie für die Elektrolysezelle ist eine Zuführung von Primärenergieträgern wie zum Beispiel Kohle, Öl, Gas oder Holz, erforderlich.

Druckschrift DE 19533097 A gibt eine Kombination aus einer Brennstoffzelle und einer Elektrolysezelle an, wobei als Stromquelle für die Elektrolyse eine Solarzelle oder das elektrische Versorgungsnetz angegeben wird.

Druckschrift US 2002/029820 A1 zeigt verschiedene Energielieferanten zur Versorgung einer Elektrolysezelle mit elektrischer Energie. Dies sind Windkraftsolarenergie, geothermische Energie, Wellenenergie, hydroelektrische Energie, ozeanthermische Energie und andere Energiequellen wie die Verbrennung von Kohlenwasserstoff oder fossilen Energieträgern und nukleare Energie.

DE 15 13 098 A beschäftigt sich mit der netzunabhängigen Energieversorgung von Verbrauchern, wie z.B. Funkrelaisstationen oder Fernsehumsetzern. Hierzu wird eine Kombination aus Brennstoffzelle, Elektrolysezelle und einem mittels Wind betriebenen Generator vorgeschlagen. Die Windenergie wird dabei mittels der elektrischen Energie in chemische Energie in Form von H₂ und O₂ umgesetzt, welche zwischengespeichert wird. Über die Brennstoffzelle kann diese Energie bedarfsabhängig wieder freigesetzt werden. Es wird darauf verwiesen, daß anstelle eines Windantriebs auch ein Wasserantrieb des Generators möglich ist.

Es ist deshalb die Aufgabe der Erfindung, die Versorgung für energie-autarke Systeme wie z. B. Funksensoren mit aus thermischer Umgebungsenergie gewonnener elektrischer Energie, dauerhaft und kostengünstig sicherzustellen.

Diese Aufgabe wird dadurch gelöst, daß eine Anordnung zur Versorgung energie-autarker Systeme, insbesondere

Funksensoren, mit zumindest einem Thermoelement das aus einem in seiner Vergebung befindticher rävlichen Temperatur quadienten elektrische Energie wandelt undso gestaltet ist, daß das Thermoelement zur Umwandlung eines räumlichen Temperaturgradienten in eine elektrische Spannung mit einer Elektrolyse-Einrichtung verbunden ist, in der ein oder mehrere Stoffe in energiereiche Spaltprodukte zerlegt werden und eine Speichereinrichtung mit der Elektrolyse-Einrichtung verbunden ist, in der die Spaltprodukte voneinander getrennt gespeichert werden, wobei die Speichereinrichtung mit einer Brennstoffzelle verbunden ist, in der die Spaltprodukte unter Abgabe von elektrischer Energie wieder kombinieren.

Dabei liegt der Erfindungsgedanke darin, unabhängig davon, ob elektrische Energie im Augenblick benötigt wird, bei Vorhandensein eines Temperaturgradienten elektrische Energie zu erzeugen und diese möglichst verlustfrei über beliebig lange Zeit zu speichern und erst bei Bedarf von elektrischer Energie wieder zur Verfügung zu stellen. Dabei wird die in dem Thermoelement erzeugte elektrische Energie einer Elektrolyse-Einrichtung zugeführt, in der ein Stoff durch den Prozeß der Elektrolyse in zumindest zwei seiner Komponenten zerlegt wird. Diese, zumindest zwei Komponenten, werden dann, voneinander getrennt, jeweils zumindest einer Speichereinrichtung zugeführt und dort gespeichert.

Wird durch einen elektrischer Verbraucher wie z. B. den Funksensor zur Messung eines beliebigen physikalischen Parameters und/oder zur Absetzung eines Funkprotokolls elektrische Energie benötigt, so werden die zumindest zwei Komponenten, in einem stöchiometrischen Verhältnis zueinander, der Speichereinrichtung entnommen und einer sogenannten Brennstoffzelle zugeführt. In dieser Brennstoffzelle kombinieren die beiden Komponenten wieder zu dem ursprünglichen Stoff unter Abgabe von elektrischer Energie. Diese elektrische Energie wird dem Verbraucher, z. B. dem Funksensor, zugeführt.

In einer vorteilhaften Ausführungsform wird der in der Brennstoffzelle aus der Kombination der beiden Komponenten gewonnene Ausgangsstoff der Elektrolyse-Einrichtung zugeführt, so daß in Bezug auf den verwendenden Stoff für die Elektrolyse und die daraus gewonnenen Komponenten ein geschlossener Kreislauf gebildet ist.

In einer weiteren vorteilhaften Ausführungsform sind die einzelnen Komponenten der Anordnung zur Versorgung energieautarker Systeme wie das Thermoelement, die Elektrolyse-Einrichtung, die Speichereinrichtung und die Brennstoffzelle zu einer baulichen Einheit zusammengefaßt.

In einer weiteren vorteilhaften Ausführungsform sind die einzelnen Komponenten und/oder deren bauliche Einheit in Mikrosystemtechnik ausgebildet. Damit ist insbesondere der Einsatz bei kleinen und kleinsten energie-autarken Systemen realisierbar.

Im Folgenden ist die Erfindung anhand eines Ausführungsbeispiels und einer Figur näher beschrieben.

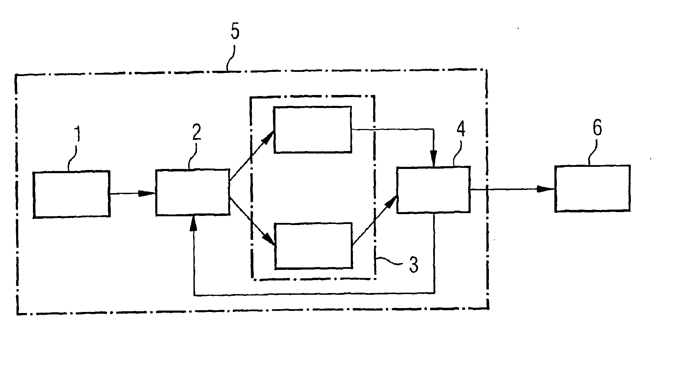

Die Figur zeigt eine schematische Darstellung einer erfindungsgemäßen Anordnung.

Zur Energiegewinnung ist ein Thermoelement 1 eingesetzt, der aus einem räumlichen Temperaturgradienten eine elektrische Spannung erzeugt. Dabei nutzt das Thermoelement zum Beispiel die Abwärme von Maschinen, Anlagen, Heizkörpern, oder Temperaturänderungen im Tagesverlauf. Die damit erzeugte elektrische Spannung ist unmittelbar von der Höhe des jeweiligen Temperaturgradienten abhängig. Zum Beispiel ist ein einzelnes Thermoelement oder eine Serienschaltung mehrerer Thermoelemente verwendbar.

Es ist gegebenenfalls die Spannung des Thermoelements klein, aber der resultierende Strom dennoch ausreichend stark, um einer Elektrolyse-Einrichtung 2 zugeführt, den darin sich befindlichen Stoff in seine Komponenten elektrolytisch zu zerlegen. Die dafür benötigte Zeit ist für den Erfindungsgedanken ohne Bedeutung.

Der durch die Elektrolyse in zumindest zwei Komponenten spaltbare Stoff kann z. B. Wasser sein, das über die Elektrolyse in Wasserstoff und Sauerstoff zerlegt wird. Es eignet sich auch jeder andere, elektrolytisch in zumindest zwei Komponenten trennbare Stoff. Die zumindest zwei Komponenten werden getrennt voneinander in einer Speichereinrichtung 3 aufbewahrt.

Dabei ist sichergestellt, daß z. B. im Vergleich mit einem elektrochemischen Speicher, wie z. B. einem Akkumulator, die gespeicherte Energie nicht durch interne Prozesse verloren geht. Durch die getrennte Aufbewahrung der Spaltprodukte in der Speichereinrichtung 3 ist darüber hinaus sichergestellt, daß eine Unabhängigkeit der Energieversorgung von der verfügbaren Energie, wie z. B. der thermischen Energie, darstellbar ist.

Benötigt nun ein an dieses System angeschlossener elektrischer Verbraucher 6 elektrische Energie, so werden die beiden Stoffe in einer Brennstoffzelle in einem der Elektrolyse umgekehrtem Prozeß zusammengeführt, wobei die vorher gespeicherte Energie als elektrische Energie freigesetzt wird. Diese wird dem Verbraucher 6 zugeführt. In der Brennstoffzelle 4 entsteht dabei der ursprüngliche Ausgangsstoff, der in einer vorteilhaften Ausführungsform, wie in der Figur schematisch dargestellt, der Elektrolyse-Einrichtung 2 zugeführt wird.

Damit ist ein Stoffkreislauf entstanden, der als verlustfrei bezeichnet werden darf. Die Brennstoffzelle 4 mit dem für die Elektrolyse eingesetzten Stoff, ist dabei so bemessen, daß das Spannungsniveau der Brennstoffzelle 4 dem vom Verbraucher 6 benötigten Spannungsniveau entspricht, wie zum Beispiel 5V.

### Bezugszeichenliste

- 1: Thermoelement
- 2: Elektrolyse-Einrichtung
- 3: Speichereinrichtung
- 4: Brennstoffzelle
- 5: Bauliche Einheit aus 1 bis 4
- 6: Elektrischer Verbraucher

## Patentansprüche

1. Anordnung zur Versorgung energie-autarker Systeme, insbesondere Funksensoren, mit zumindest einem Thermoelement das aus einem in seiner Umgebung befindlichen räumlichen Temperaturgradienten elektrische Energie wandelt,
**dadurch gekennzeichnet, daß**
das Thermoelement (1) zur Umwandlung eines räumlichen Temperaturgradienten in eine elektrische Spannung, mit einer Elektrolyse-Einrichtung (2) verbunden ist, in der ein oder mehrere Stoffe in energiereiche Spaltprodukte zerlegt werden und eine Speichereinrichtung (3) mit der Elektrolyse-Einrichtung (2) verbunden ist, in der die Spaltprodukte voneinander getrennt gespeichert werden, wobei die Speichereinrichtung (3) mit einer Brennstoffzelle (4) verbunden ist, in der die Spaltprodukte unter Abgabe von elektrischer Energie wieder kombiniert werden.

2. Anordnung nach Patentanspruch 1,
**dadurch gekennzeichnet, daß** der aus der Kombination der Spaltprodukte entstandene Stoff über eine Verbindung von der Brennstoffzelle (4) zu der Elektrolyse-Einrichtung (2) der Elektrolyse-Einrichtung (2) zugeführt wird.

3. Anordnung nach Patentanspruch 1 bis 2,
**dadurch gekennzeichnet, daß** das Thermoelement (1), die Elektrolyse-Einrichtung (2), die Speichereinrichtung (3) und die Brennstoffzelle (4) zu einer baulichen Einheit (5) zusammengefaßt sind.

4. Anordnung nach Patentanspruch 1 bis 3,
**dadurch gekennzeichnet, daß** die Ausführung in Mikrosystemtechnik erfolgt.

## Revendications

1. Dispositif d'alimentation de systèmes autonomes du point de vue de l'énergie, notamment de capteurs radio, comprenant au moins un thermoélément qui transforme en énergie électrique un gradient de température local se trouvant dans son environnement,
**caractérisé en ce que** le thermoélément (1) est, pour la transformation d'un gradient de température local en une tension électrique, relié à un dispositif (2) d'électrolyse, dans lequel une ou plusieurs substances sont décomposées en produits de décomposition riches en énergie et un dispositif (3) d'emmagasinage est relié au dispositif (2) d'électrolyse, dispositif (3) dans lequel les produits de décomposition sont emmagasinés d'une manière séparée les uns des autres, le dispositif (3) d'emmagasinage étant relié à une pile (4) à combustible, dans laquelle les produits de décomposition sont recombinés en donnant de l'énergie électrique.

2. Dispositif suivant la revendication 1, **caractérisé en ce que** la substance créée par la combinaison des produits de décomposition est envoyée au dispositif (2) d'électrolyse par une liaison allant de la pile (4) à combustible au dispositif (2) d'électrolyse.

3. Dispositif suivant la revendication 1 ou 2, **caractérisé en ce que** le thermoélément (1), le dispositif (2) d'électrolyse, le dispositif (3) d'emmagasinage et la pile (4) à combustible sont rassemblés en une unité (5) de construction.

4. Dispositif suivant l'une des revendications 1 à 3, **caractérisé en ce que** la réalisation s'effectue en technique de microsystème.

## Claims

1. Arrangement for supplying autonomous-power systems, in particular radio sensors, having at least one thermocouple which converts electrical energy from a three-dimensional temperature gradient in its vicinity,
**characterized in that** the thermocouple (1) is connected to an electrolysis device (2) for conversion of a three-dimensional temperature gradient to an electrical voltage, in which electrolysis device (2) one or more substances are broken down into high-energy fission products and a storage device (3) is connected to the electrolysis device (2), in which the fission products are stored separately from one another, with the storage device (3) being connected to a fuel cell (4) in which the fission products are combined, with electrical energy being emitted.

2. Arrangement according to Patent Claim 1,
**characterized in that**
the substance which is created from the combination of the fission products is supplied to the electrolysis device (2) via a connection from the fuel cell (4) to the electrolysis device (2).

3. Arrangement according to Patent Claim 1 or 2,
**characterized in that** the thermocouple (1), the electrolysis device (2), the storage device (3) and the fuel cell (4) are combined to form one physical unit (5).

4. Arrangement according to Patent Claims 1 to 3,
**characterized in that** the arrangement is embodied using microsystem technology.
